# EUROPEAN PATENT APPLICATION

(11) **EP 4 645 230 A1**
(43) Date of publication of application: **05.11.2025**
(21) Application number: 23909441.0
(22) Date of filing: 08.10.2023
(51) Int. Cl.: G06T 11/20

(54) **PARKING LOT MAP GENERATION METHOD, APPARATUS AND DEVICE, AND STORAGE MEDIUM**

(30) Priority: 30.12.2022 CN 202211734304
(71) Applicant: Guangzhou Xiaopeng Autopilot Technology Co., Ltd., Guangzhou, Guangdong 510000 (CN); GUANGDONG KUNPENG GEOSPATIAL INFORMATION TECHNOLOGY CO., LTD., Guangzhou, Guangdong 510000 (CN)
(72) Inventor: HU, Bo, Guangzhou, Guangdong 510000 (CN); GAO, Bingtao, Guangzhou, Guangdong 510000 (CN); LIU, Dehao, Guangzhou, Guangdong 510000 (CN); CHEN, Ming, Guangzhou, Guangdong 510000 (CN)
(74) Representative: Ran, Handong
(86) International application number: PCT/CN2023/123442
(87) International publication number: WO 2024/139507

(57) **Abstract**

The present application relates to a parking lot map generation method, apparatus and device, and a storage medium. The parking lot map generation method comprises: acquiring crowdsourcing trajectory data of a parking lot collected by different vehicles; selecting, from the crowdsourcing trajectory data, a set number of trajectory data meeting a preset condition; dividing the set number of trajectory data into different data subsets, and generating different candidate maps according to the different data subsets; and comparing the different candidate maps, and selecting one candidate map as a target map according to a comparison result.

## Description

### CROSS-REFERENCE TO RELATED APPLICATIONS

The present application claims priority to Chinese Patent Application No. 202211734304.1, filed on December 30, 2022, which is incorporated herein by reference in its entirety.

### TECHNICAL FIELD

The present application relates to the field of autonomous driving technology, and in particular, to a parking lot map generation method, apparatus, device and storage medium.

### BACKGROUND

A crowdsourcing map is a map constructed by map data collected in a crowdsourcing mode. By allocating data collection work to each vehicle, the map data is collected by each vehicle, which avoids the process of on-site collection and survey by special personnel.

However, a parking lot map generation solution based on crowdsourced trajectory data in the related art requires the crowdsourced trajectory data to have high precision, and therefore, map fault tolerance is not high and is greatly dependent on manual involvement.

### SUMMARY

In order to solve or partially solve the problem existing in the related art, the present application provides a parking lot map generation method, apparatus, device and storage medium, which can reduce precision requirements of the crowdsourced trajectory data, improve map fault tolerance and generate a parking lot map automatically.

According to a first aspect of the present application, a parking lot map generation method is provided. The method comprises:
acquiring crowdsourced trajectory data of a parking lot collected by different vehicles;
selecting a set number of trajectory data meeting a preset condition from the crowdsourced trajectory data;
dividing the set number of trajectory data into different data subsets, and generating different candidate maps according to the different data subsets; and
comparing the different candidate maps, and selecting one candidate map as a target map according to a comparison result.

In one embodiment, the selecting a set number of trajectory data meeting a preset condition from the crowdsourced trajectory data comprises:
selecting the set number of trajectory data with large coverage and rich semantic elements from the crowdsourced trajectory data.

In one embodiment, the dividing the set number of trajectory data into different data subsets comprises:
selecting a set proportion of trajectory data from the set number of trajectory data as one data subset according to a random or preset combination rule so as to the set number of trajectory data into different data subsets.

In one embodiment, the generating different candidate maps according to the different data subsets comprises:
for each data subset, combining any two trajectories in the data subset and then performing alignment processing on the two trajectories, and storing an association constraint relationship resulting from the alignment;
obtaining multiple groups of association constraint relationships after performing alignment processing on each data subset;
performing joint optimization on the selected set number of trajectory data meeting the preset condition and the multiple groups of association constraint relationships, performing cluster extraction on semantic elements in each data subset after completing the joint optimization, and generating a candidate map corresponding to each data subset.

In one embodiment, the obtaining multiple groups of association constraint relationships after performing alignment processing on each data subset comprises:
obtaining Cn2 groups of association constraint relationships after performing alignment processing on each data subset.

In one embodiment, the performing alignment processing comprises:
performing coarse alignment according to a first semantic element, and then performing fine alignment according to a second semantic element.

In one embodiment, the first semantic element comprises one or a combination of the following: a trajectory shape, and a long parking stall, wherein the long parking stall is reassembled according to a parking stall feature in the crowdsourced trajectory data;
the second semantic element comprises one or a combination of the following: a parking stall, a column, an arrow, a lane marking, a speed bump.

In one embodiment, the comparing the different candidate maps, and selecting one candidate map as a target map according to a comparison result comprises:
performing quality inspection on the different candidate maps, and selecting one candidate map of good quality as the target map according to a quality inspection result.

In one embodiment, the method further comprises:
aligning the crowdsourced trajectory data with a historical map to obtain incremental trajectory data;
updating the historical map according to the incremental trajectory data.

According to a second aspect of the present application, a parking lot map generation apparatus is provided. The apparatus comprises:
a data acquisition module configured to acquire crowdsourced trajectory data of a parking lot collected by different vehicles;
a data selection module configured to select a set number of trajectory data meeting a preset condition from the crowdsourced trajectory data;
a combination and generation module configured to divide the set number of trajectory data into different data subsets and generate different candidate maps according to the different data subsets; and
an output module configured to compare the different candidate maps and select one candidate map as a target map according to a comparison result.

In one embodiment, the combination and generation module comprises:
a combination submodule configured to select a set proportion of trajectory data from the set number of trajectory data as one data subset according to a random or preset combination rule and divide the set number of trajectory data into different data subsets.

In one embodiment, the combination and generation module comprises:
a candidate map generation submodule configured to: perform alignment processing on any two trajectories in each data subset after combination, and store an association constraint relationship resulting from the alignment; obtain multiple groups of association constraint relationships after performing the alignment processing on each data subset; perform joint optimization on the selected set number of trajectory data meeting the preset condition and the multiple groups of association constraint relationships; and, perform cluster extraction on semantic elements in each data subset after completing the joint optimization, and generate a candidate map corresponding to each data subset.

In one embodiment, the output module comprises:
a quality inspection submodule configured to perform quality inspection on the different candidate maps; and
a map selection submodule configured to select one candidate map of good quality as the target map according to a quality inspection result.

According to a third aspect of the present application, a parking lot map generation device is provided. The device comprises:
a processor; and
a memory having stored thereon an executable program which, when executed by the processor, causes the processor to execute the method as described above.

According to a fourth aspect of the present application, a computer-readable storage medium is provided. The storage medium stores an executable program, wherein the executable program, when executed by a processor of an electronic device, causes the processor to execute the method as described above.

The technical solution provided in the present application may include the following beneficial effects:
According to the technical solution of the present application, first, a set number of trajectory data that meet the preset condition is selected from the crowdsourced trajectory data; the set number of trajectory data is then divided into different data subsets, and different candidate maps are generated according to the different data subsets; the different candidate maps are then compared, and one candidate map is selected as a target map according to a comparison result. By means of the described processing, the precision requirement for the crowdsourced trajectory data can be reduced; map fault tolerance of the map can be improved by dividing different data subsets and generating different candidate maps according to different data subsets for selection, and the parking lot map can be fully automatically generated without manual involvement in the whole mapping process.

Further, in the set number of trajectory data, the present application selects a set proportion of trajectory data as a data subset according to a random or preset combination rule, and divides the set number of trajectory data into different data subsets. For each data subset, any two trajectories in the data subset are combined for alignment processing, then the aligned association constraint relationship is stored. After performing alignment processing on each data subset, multiple groups of association constraint relationships are obtained. Joint optimization is performed on the selected set number of trajectory data meeting the preset condition and the multiple groups of association constraint relationships, and then cluster extraction on semantic elements in each data subset is performed after completing the joint optimization, and a candidate map corresponding to each data subset is generated. The present application uses the idea of combination to obtain the association constraint relationship between any two trajectories, and finally joint optimization is performed uniformly to obtain a final alignment result. In this way, there is no influence of a cumulative error, and at the same time, there is no influence of a single alignment result, so that map fault tolerance is high.

It should be understood that the above general description and the detailed description following are only illustrative and explanatory and do not limit the present application.

### BRIEF DESCRIPTION OF DRAWINGS

The above and other purposes, features and advantages of the present application will become more apparent by describing in more detail exemplary embodiments of the present application in conjunction with the accompanying drawings, in which, in exemplary embodiments of the present application, the same reference numerals generally refer to the same components.
FIG. 1 is a first schematic flowchart of a parking lot map generation method provided in the present application.
FIG. 2 is a second schematic flowchart of a parking lot map generation method shown in the present application.
FIG 3 is a schematic diagram of a Birds Eye View stitched image of a parking lot in the crowdsourced trajectory data shown in the present application.
FIG. 4 is a schematic diagram of selecting trajectory data from the crowdsourced trajectory data in the parking lot map generation method shown in the present application.
FIG. 5 is a schematic diagram of dividing different data subsets and generating different candidate maps in the parking lot map generation method shown in the present application.
FIG. 6 is a schematic diagram of aligning any two trajectories in each data subset in the parking lot map generation method shown in the present application.
FIG. 7 is a comparative schematic diagram of the alignment in the parking lot map generation method shown in the present application and the serial alignment of related art.
FIG. 8 is a schematic diagram of the original trajectory before optimization shown in the present application.
FIG. 9 is a schematic diagram of the map after optimization by using the solution shown in the present application.
FIG. 10 is a schematic diagram of the original map before updating shown in the present application.
FIG. 11 is a schematic diagram of the original map area identified in the updated map shown in the present application.
FIG. 12 is a schematic diagram of the incremental map area identified in the updated map shown in the present application.
FIG. 13 is a first structural schematic diagram of a parking lot map generation apparatus shown in the present application.
FIG. 14 is a second structural schematic diagram of a parking lot map generation apparatus shown in the present application.
FIG. 15 is a schematic diagram of the structure of the parking lot map generation device shown in the present application.

### DESCRIPTION OF EMBODIMENTS

The embodiment of the present application is described in more detail below with reference to the accompanying drawings. Although the embodiments of the present application are shown in the drawings, it should be understood that the present application can be realized in various forms and should not be limited by the embodiments set forth herein. Rather, these embodiments are provided in order to make the present application more thorough and complete, and to enable the scope of the present application to be communicated in its entirety to those skilled in the art.

The terms used in the present application are intended only to describe specific embodiments and are not intended to limit the present application. The words "a", "described" and "the" in the singular forms used in the present application and the accompanying claims are intended to include the plural form as well, unless the context clearly indicates other meanings. It should also be understood that the term "and/or" as used herein refers to and encompasses any or all possible combinations of one or more associated listed items.

It should be understood that, although the terms "first", "second", "third", etc., may be used to describe various information in the present application, such information should not be limited to these terms. These terms are only used to distinguish the same type of information from each other. For example, without departing from the scope of the present application, the first information may also be referred to as the second information, and similarly, the second information may also be referred to as the first information. Thus, defining the "first" and "second" features may explicitly or implicitly include one or more of these features. In the description of the present application, "plurality" means two or more than two, unless otherwise expressly and specifically qualified.

The parking lot map generation solutions based on crowdsourced trajectory data in related art require high-precision crowdsourced trajectory data, and therefore the solutions have low map fault tolerance and rely heavily on manual involvement. In order to solve the above problems, the present application provides a parking lot map generation method, which can reduce precision requirements for crowdsourced trajectory data, improve map fault tolerance, and generate a parking lot map automatically.

The technical solution of the present application is described in detail below in conjunction with the accompanying drawings.

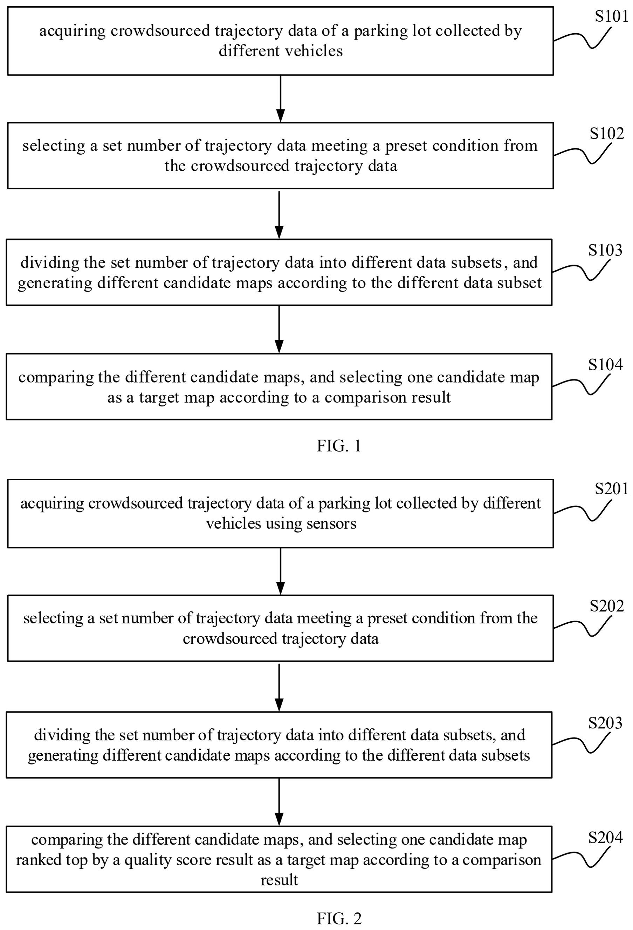

FIG. 1 is a first schematic flowchart of a parking lot map generation method provided in the present application. The method may be applied to a cloud server.

Referring to FIG. 1, the method comprises:
S101, acquiring crowdsourced trajectory data of a parking lot collected by different vehicles.

The crowdsourced trajectory data may be different point cloud trajectory data obtained according to the trajectory data collected by different vehicles. The crowdsourced trajectory data includes at least two sets of point cloud trajectory data, for example, a large amount of point cloud trajectory data may be included. The cloud server may obtain the crowdsourced trajectory data of a parking lot collected by different vehicles.

S102, selecting a set number of trajectory data meeting a preset condition from the crowdsourced trajectory data.

A preset algorithm can be used to automatically select a set number of trajectory data that meets a preset condition from the crowdsourced trajectory data, such as dozens of trajectory data items. Meeting a preset condition may refer to that the trajectory is representative, for example, the trajectory has a higher coverage contribution, and/or the trajectory contains richer semantic elements.

S103, dividing the set number of trajectory data into different data subsets, and generating different candidate maps according to the different data subsets.

A set proportion of trajectory data may be selected from the set number of trajectory data as one data subset according to a random or preset combination rule, and the set number of trajectory data are divided into different data subsets.

For each data subset, any two trajectories in the data subset may be combined for alignment processing, and an association constraint relationship obtained from the alignment may be stored. After performing the alignment processing on each data subset, multiple groups of association constraint relationships are obtained. Joint optimization is performed on all the selected trajectory data meeting the preset condition and the multiple groups of association constraint relationships, and then cluster extraction on semantic elements in each data subset is performed after completing the joint optimization, and a candidate map corresponding to each data subset is generated.

After performing alignment processing on each data subset, multiple groups of association constraint relationships are obtained. This includes obtaining Cn2 groups of association constraint relationships after performing alignment processing on each data subset.

Performing the alignment processing comprises: first performing coarse alignment according to a first semantic element, and then performing fine alignment according to a second semantic element. The first semantic element comprises one or a combination of the following: a trajectory shape, and a long parking stall, wherein the long parking stall is reassembled according to a parking stall feature in the crowdsourced trajectory data. The second semantic element comprises one or a combination of the following: a parking stall, a column, an arrow, a lane marking, and a speed bump.

S104, comparing the different candidate maps, and selecting one candidate map as a target map according to a comparison result.

Quality inspection is performed on the different candidate maps, and one candidate map of good quality is selected as the target map according to a quality inspection result.

The quality inspection may include multiple items, for example, checking alignment quality of the trajectory (including an aggregation degree after the alignment of the semantic elements, and whether there is a place with an alignment error), checking enrichment degree of the semantic elements, and so on. By means of quality inspection, a map with fewer alignment errors, a higher degree of element aggregation and richer elements may be retained.

It can be seen from this example that, in the technical solution of the present application, selection of the set number of trajectory data that meet the preset condition from the crowdsourced trajectory data is first performed; the set number of trajectory data is then divided into different data subsets, and different candidate maps are generated according to different data subsets; the different candidate maps are then compared, and one candidate map is selected as a target map according to a comparison result. By means of the described processing, the precision requirement of the crowdsourced trajectory data can be reduced, different candidate maps can be selected by dividing different data subsets and generating different candidate maps according to different data subsets, map fault tolerance can also be improved, and the parking lot map can be fully automatically generated without manual participation in the whole mapping process.

FIG. 2 is a second schematic flowchart of a parking lot map generation method shown in the present application. The method may be applied to a cloud server.

The parking lot map generation method proposed in the present application can accept a large amount of crowdsourced trajectory data, and no high precision is required for these data, and the parking lot map can be fully automatically generated without manual involvement in the mapping process. In the final stage of quality inspection, automatic quality inspection or manual quality inspection can be carried out, and even if the manual quality inspection is used, only minor manual editing is required. In the present application, the map may be updated at the same time, and the update frequency is increased, for example, renewability of a daily update frequency may be achieved.

Referring to FIG. 2, the method comprises:
S201, acquiring crowdsourced trajectory data of a parking lot collected by different vehicles using sensors.

The crowdsourced trajectory data may be different point cloud trajectory data obtained according to the trajectory data collected by different vehicles. The crowdsourced trajectory data includes at least two sets of point cloud trajectory data, for example, a large amount of point cloud trajectory data may be included.

The cloud server may obtain the crowdsourced trajectory data of a parking lot collected by different vehicles, which may include the following process:
1) Collecting trajectory data for driving in a parking lot by a vehicle, wherein the trajectory data comprises vehicle posture information and a Birds Eye View stitched image associated with the vehicle posture information.

The trajectory data collected by the vehicle during driving in the parking lot includes the vehicle posture information and the BEV (Birds Eye View) stitched image associated with the vehicle posture information.

The vehicle posture information may be determined based on the information collected in a GNSS (Global Navigation Satellite System) module, a GPS (Global Positioning System) module, an IMU (Inertial Measurement Unit) module, and a wheel speedometer of the vehicle. The IMU is a module composed of a variety of sensors such as a three-axis accelerometer, a three-axis gyroscope, and a three-axis magnetometer. The wheel speedometer is used to detect the distance traveled by the wheels over a certain period of time, so as to deduce the change in the relative posture (position and heading) of the vehicle.

The vehicle posture information may indicate the vehicle's position information and posture information, and the vehicle's posture may include a pitch angle, a yaw angle, and a roll angle of the vehicle.

The vehicle's position information may be determined by the GNSS module based on the acquired GNSS signal, or by the GPS module based on the collected GPS signal.

When the vehicle drives into a place where the GNSS signal is weak or the GPS signal is weak (such as driving into an indoor area such as an underground parking lot), the vehicle may perform dead-reckoning by using a DR (Dead Reckoning) method according to the position information of the position point where the GNSS signal or GPS signal is lower than a set threshold and the information collected by the wheel speedometer and IMU module, so as to obtain the position information of each position point during the driving process. Dead reckoning algorithm is a method of estimating the position at the next moment by measuring the distance and direction of movement under the condition that the position at the current moment is known.

The Birds Eye View stitched image, i.e., the BEV stitched image, is obtained by stitching images collected by a vehicle at least two viewing angles in the bird's-eye perspective. Multiple image acquisition devices, such as cameras, may be installed in the vehicle to capture images of the vehicle's surroundings while driving from multiple viewing angles. The acquired image may be an image of the environment directly in front of the vehicle, an image of the left side, an image of the right side, an image of the left rear side, an image of the right rear side, and so on. In an embodiment, three image acquisition devices may be arranged in the vehicle to collect images of the environment under the three viewing angles of the front of the vehicle, the left side, and the right side respectively. In other words, a camera may be mounted above the front windshield of the vehicle or above the front bumper of the vehicle, etc., to capture the environment ahead, and the cameras may be mounted near the left and right tires to capture the environment on both sides of the vehicle. Of course, in other embodiments, images from other viewing angles may also be acquired.

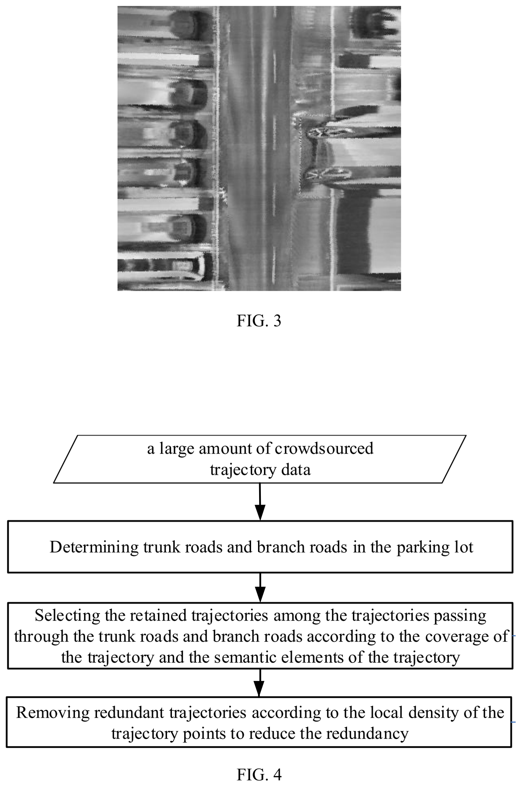

The images under multiple viewing angles collected by the vehicle at various position points may be spliced along the bird's-eye view to obtain the BEV stitched image. In other embodiments, the vehicle may also upload the acquired image under multiple viewing angles to a cloud server, and the cloud server performs splicing along the bird's-eye view to obtain the BEV stitched image. Referring to FIG. 3, the present application shows a schematic diagram of a BEV stitched image of a parking lot in the crowdsourced trajectory data. The BEV stitched image of FIG. 3 is the image of the environment in front of the vehicle, the image of the environment in front of the left side of the vehicle and the image of the environment in front of the right side of the vehicle, which are spliced along the bird's-eye view angle.

In the process of vehicle driving, the vehicle can carry out image acquisition at a plurality of position points in real time, therefore, a plurality of images collected by the vehicle may be continuously spliced along the bird's-eye view perspective, that is, multiple frames may undergo continuous BEV splicing, and a continuous BEV stitched image reflecting the surrounding environment of the vehicle driving trajectory may be obtained.

2) Identifying the semantic elements of each BEV stitched image by the vehicle or the cloud server, and determining the semantic elements in the BEV stitched image.

The vehicle may send the BEV stitched image to the cloud server for perception. The cloud server may identify and extract semantic elements (also known as semantic feature points) in images through deep learning, and the extracted semantic elements include a lane lines (such as a lane solid line, a lane dashed line), an arrow, a stop line, a speed bump, a parking stall edge line in a parking lot, a parking stall entrance line, etc., which are not specifically limited here.

Semantic element recognition refers to determining the area of pixels in which the semantic element is located in a BEV stitched image. It should be understood that the recognition results obtained by semantic element recognition indicate which semantic elements are included in the BEV stitched image on the one hand, and indicate the position of each semantic element in the BEV stitched image on the other hand.

For example, a neural network model may be used to identify semantic elements in a BEV stitched image. In some embodiments, Mask R-CNN (Mask Recycle Convolutional Neural Network), PANet (Path Aggregation Network), and FCIS (Fully Convolutional Instance-aware Semantic Segmentation) may be used to segment each semantic element of the BEV stitched image, so as to determine the position of each semantic element in the BEV stitched image.

In some embodiments, each BEV stitched image may be input into a semantic element recognition model of the cloud server, and the semantic element recognition model performs semantic element recognition and outputs the semantic element information corresponding to each BEV stitched image. The semantic element information is used to indicate the semantic elements in the corresponding BEV stitched image.

In some embodiments, the semantic element recognition model may be constructed by one or more neural networks such as convolutional neural networks, fully connected neural networks, feedforward neural networks, long short-term memory networks, recurrent neural networks, and so on.

3) Generating the point cloud trajectory data corresponding to each trajectory data by the cloud server according to the semantic elements in the BEV stitched image and the vehicle posture information associated with the BEV stitched image.

The cloud server may generate the point cloud trajectory data corresponding to each trajectory data according to the semantic elements in the BEV stitched image and the vehicle posture information associated with the BEV stitched image, that is, to obtain the crowdsourced trajectory data of the parking lot. In other words, the cloud server may reconstruct a 2D points detected from the image into a 3D point cloud of a road plane through the vehicle posture information already known above.

The point cloud trajectory data includes the position information of each position in the trajectory path and the point cloud model of the semantic elements on the trajectory path. It should be understood that the relative position relationship between the point cloud models of different semantic elements in the point cloud trajectory is basically the same as that presented by the BEV stitched image.

The point cloud model of semantic elements is a collection of massive points that express spatial distribution and target surface feature of semantic elements under the same spatial reference system, and after obtaining the spatial coordinates of each sampling point of the semantic element, all the sampling points on the semantic element are arranged according to the corresponding coordinates to obtain the point cloud model of the semantic element.

In some embodiments, each semantic element in the BEV stitched image may be reconstructed in three dimensions according to the vehicle posture information associated with the BEV stitched image to obtain the point cloud trajectory data corresponding to the BEV stitched image.

By 3D reconstruction of the semantic elements in the BEV stitched image, the 3D point cloud model of the corresponding semantic elements may be obtained. On this basis, the position information of the semantic elements in a geospatial space may be determined by combining the posture information associated with the BEV stitched image and the position information of the semantic elements in the BEV stitched image, so that the 3D point cloud model of each semantic element in the BEV stitched image may be arranged according to the position information of the semantic elements in the geospatial space. The point cloud trajectory data corresponding to the BEV stitched image is obtained correspondingly.

S202, selecting a set number of trajectory data meeting a preset condition from the crowdsourced trajectory data.

When a massive amount of (e.g., thousands items) of the crowdsourced trajectory data is collected, in order to improve mapping efficiency, the present application may automatically select a set number of trajectory data that meet the preset condition through a preset algorithm among the numerous crowdsourced trajectory data, for example selecting dozens of trajectory data for automatic mapping.

Meeting a preset condition may mean that a trajectory is representative, for example, the trajectory has a higher coverage contribution, and/or the trajectory contains richer semantic elements.

Referring to FIG. 4, a schematic diagram of selecting trajectory data from the crowdsourced trajectory data in the parking lot map generation method is shown in the present application. FIG. 4 includes the following processes:
1) Determining trunk roads and branch roads in the parking lot.

The trunk roads and branch roads in the parking lot may be found according to the area density.

2) Selecting the retained trajectories among the trajectories passing through the trunk roads and branch roads according to a coverage rate of the trajectory and the semantic elements of the trajectory.

At this time, a representative trajectory with greater contribution to the coverage rate and richer semantic elements will be selected. In other words, the representative trajectory is one that contributes more to the coverage rate and is richer in its own semantic elements. The coverage rate means that as long as there is a trajectory passing through a path, then the path is covered. If it is a trunk road, that is, a road with many trajectories passing through, then this trunk road needs to retain more trajectories. If it is a branch road, that is, a road where only one or two trajectories pass through, then only one trajectory is retained for the branch road.

3) Removing redundant trajectories according to the local density of the trajectory points to reduce the redundancy.

The redundancy may be calculated by calculating the density of the local trajectory points. The local density threshold of the trunk road is larger, and the local density threshold of the branch road is smaller. In the present application, in order to maximize the coverage, many trajectories will be retained, and there will be redundancy. Then, depending on the local density of the trajectory points, some redundant trajectories may be removed to reduce the redundancy.

S203, dividing the set number of trajectory data into different data subsets, and generating different candidate maps according to the different data subsets.

In the present application, a set proportion of trajectory data may be selected from the set number of trajectory data as one data subset according to a random or preset combination rule, and the set number of trajectory data are divided into different data subsets.

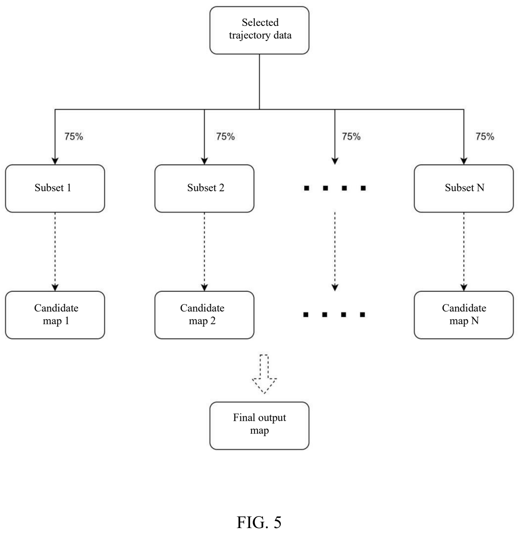

For example, as shown in FIG. 5, a set proportion of (e.g., 75%) of the data may be randomly selected from the dozens of trajectory data selected, so that it may be divided into N (choose N between 3~5) data subsets. Each data subset may be processed in subsequent processes to generate a candidate map, and finally a final output target map is selected from the candidate maps with the purpose of improving map fault tolerance. The preset combination rule may be, for example, combining every two adjacent trajectory data into a data subset, or combining every odd number of trajectory data into a data subset, or combining every even number of trajectory data into a data subset, or combining every other trajectory data into a data subset.

For each data subset, any two trajectories in the data subset may be combined for alignment processing, and an aligned association constraint relationship may be stored. After performing the alignment processing on each data subset, multiple groups of association constraint relationships are obtained. Joint optimization is performed on all the selected trajectory data meeting the preset condition (i.e., representative) and the multiple groups of association constraint relationships, and then cluster extraction on semantic elements in each data subset is performed after completing the joint optimization, and a candidate map corresponding to each data subset is generated. Performing the alignment processing comprises: first performing coarse alignment according to a first semantic element, and then performing fine alignment according to a second semantic element. The first semantic element comprises one or a combination of the following: a trajectory shape, and a long parking stall, wherein the long parking stall is reassembled according to a parking stall feature in the crowdsourced trajectory data. The second semantic element comprises one or a combination of the following: a parking stall, a column, an arrow, a lane marking, and a speed bump. The parking stalls on the same side of the same straight road may be connected to form a long parking stall. Joint optimization is a graph optimization, and is a nonlinear least squares problem solved by means of iteration. The so-called graph optimization is to express a conventional optimization problem in the form of a graph. A specific manner of joint optimization may be implemented by using a related art, which is not limited in the present application.

The present application adopts a novel trajectory association method. The present application uses the idea of combination to align any two trajectory data in each data subset with each other, and the association constraint relationship between them is stored.

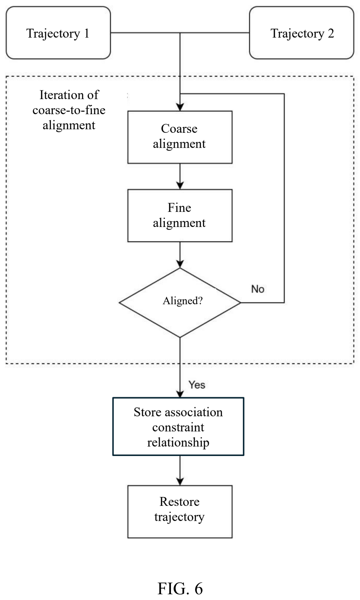

The method of alignment between the two trajectories makes use of the idea of iteration and coarse-to-fine. Firstly, the parking stall features in the semantic elements obtained after the preceding steps are reorganized into long parking stall group features. As shown in FIG. 6, in each round of coarse-to-fine iteration, the trajectory shape and long parking stall are first used for coarse alignment, and then the semantic element features such as a parking stall, a column, an arrow, a lane line, and a speed bump are used for fine alignment. Because the semantic element features (such as a parking stall, a column, an arrow, a lane line, and a speed bump, etc.) are fixed, the precise alignment of semantic element features such as a parking stall, a column, an arrow, a lane line, and a speed bump can better ensure the accuracy of the parking lot map. After several iterations, the data from the two trajectories will gradually align together. Finally, the association constraint relationship between them is stored, and the data of the two trajectories are restored to their original state. Restoring to the original state refers to restoring the position of the trajectory itself to its original state, so that it does not affect the trajectory to continue to align with other trajectories.

With regard to an association constraint relationship, for example, two trajectories observe the same element, but due to existence of an error, the position of the element observed respectively are different, and the difference is an association constraint. The difference includes rotation and translation. There will be many such constraint relationships between the two trajectories. By way of the constraint relationships, the two trajectories are associated together. Since the positions of the two trajectories will change during the process of alignment, after the association constraint relationship is finally found, the association constraint relationship is stored, and then the positions of the trajectories themselves are restored to the original state, so that it will not affect the continuous alignment with other trajectories for association. The association between any two trajectories needs to be found, and therefore Cn2 groups of association constraint relationships between trajectories are obtained. In the present application, the Cn2 groups of association constraint relationships between trajectories are required for subsequent joint optimization.

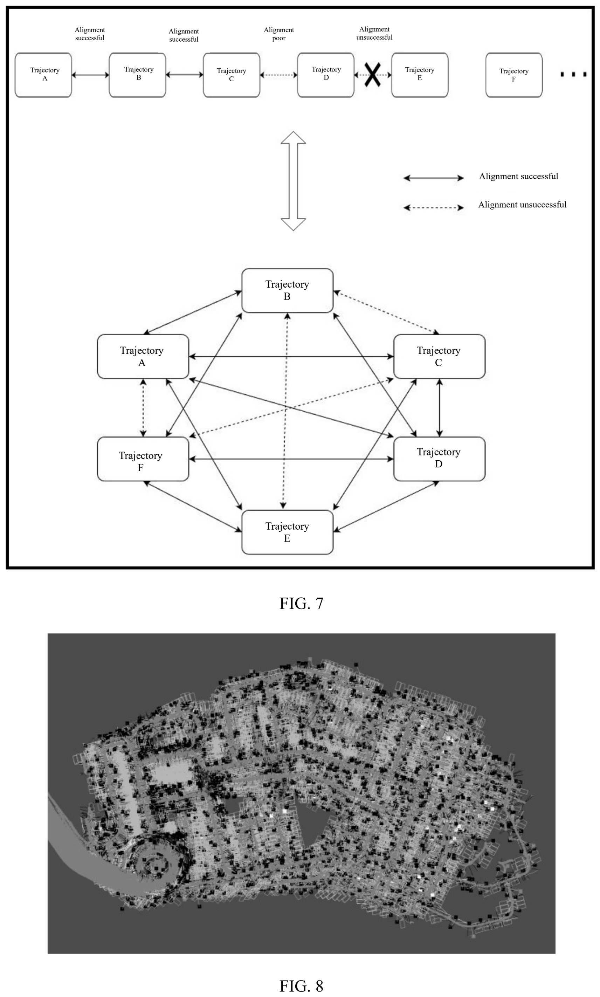

FIG. 7 is a comparative schematic diagram of the alignment in the parking lot map generation method shown in the present application and the serial alignment of related art. The upper part of FIG. 7 is the serial alignment scheme of the related art, and the lower part of FIG. 7 is the alignment scheme of the present application, with the solid connection line indicating the alignment success and the dashed connection line indicating the alignment failure. The present application does not involve the trajectories in a serial manner for the mapping. The disadvantage of sequential serial mapping in the related art is that once the alignment result of a certain trajectory is not good, the error will be transmitted to the subsequent alignment process, resulting in poor or even failed final alignment results. Moreover, the solution of the present application does not require manual guidance for alignment splicing. The present application uses the idea of combination to obtain the correlation relationship between any two trajectories, and finally uniformly carries out joint optimization to obtain the final alignment result, so that there is no influence of cumulative error, and it is not affected by a single alignment result, making map fault tolerance high.

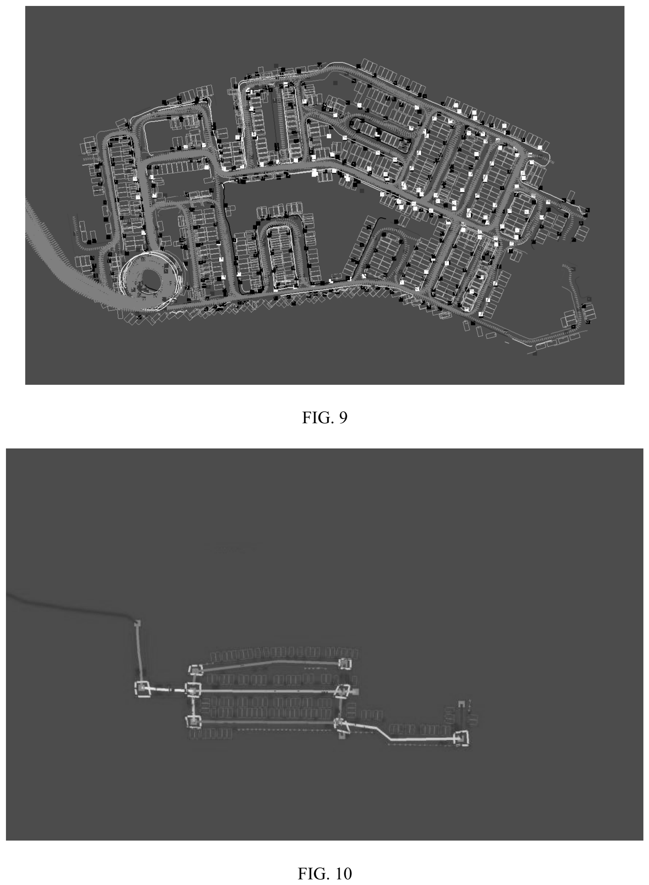

After alignment for each data subset, the association constraint relationships of may be obtained. That is to say, through the association between any two trajectories, Cn2 group association constraint relationships may be obtained. Cn2 represents the number of ways to choose 2 unordered elements from n elements, where Cn2 denotes the number of combinations. All the selected trajectory data that meet the preset condition (i.e., representative) are jointly optimized together with the Cn2 groups of association constraint relationships, and all the trajectories can be aligned together with high quality. Selecting the selected trajectories that meet the preset condition (i.e., representative) instead of all crowdsourced trajectories for joint optimization may make running speed faster. After the joint optimization is completed, all semantic elements (semantic features) in each data subset are clustered and extracted to generate a candidate map corresponding to each data subset. Referring to FIG. 8, a schematic diagram of the original trajectory before optimization in the present application is shown. Referring to FIG. 9, a schematic diagram of the map after optimization by using the solution in the present application is shown.

S204, comparing the different candidate maps, and selecting one candidate with a top-ranked quality score as a target map according to a comparison result.

Quality inspection is performed on the different candidate maps, and one candidate map of good quality is selected as the target map according to a quality inspection result. For example, among N candidate maps, a candidate map with better overall quality is automatically selected as a target map for final output after quality check and comparison. For example, a candidate map with the best quality may be selected as the target map for final output.

The quality inspection may include multiple items, for example, checking the alignment quality of the trajectory (including the aggregation degree after the alignment of the semantic elements, and whether there is a place with an alignment error), checking the enrichment degree of the semantic elements, and so on. By means of quality inspection, a map with fewer alignment errors, a higher degree of element aggregation and richer elements may be retained.

After quality inspection is performed on each candidate map, ranking may be performed according to a quality score, where the higher the ranking is, the better the quality is, and according to a comparison result, a candidate map ranked top according to the quality score is selected as a target map, for example, a candidate map ranked top according to the quality score is selected as the target map.

It should be noted that the present application may also use the above idea of processing for map updating.

For example, the crowdsourced trajectory data may be aligned with the historical map to obtain incremental trajectory data, and the historical map is updated based on incremental trajectory data.

The historical map, i.e., existing map, refers to a map that has been generated and produced before. The map update function also uses the above idea of processing. The collected original crowdsourced trajectories may be directly aligned with the historical map, and the element association is used as the association constraint relationship, but in the above map generation method, the association constraint is between the trajectories, and here the association constraint is between the trajectory and the map.

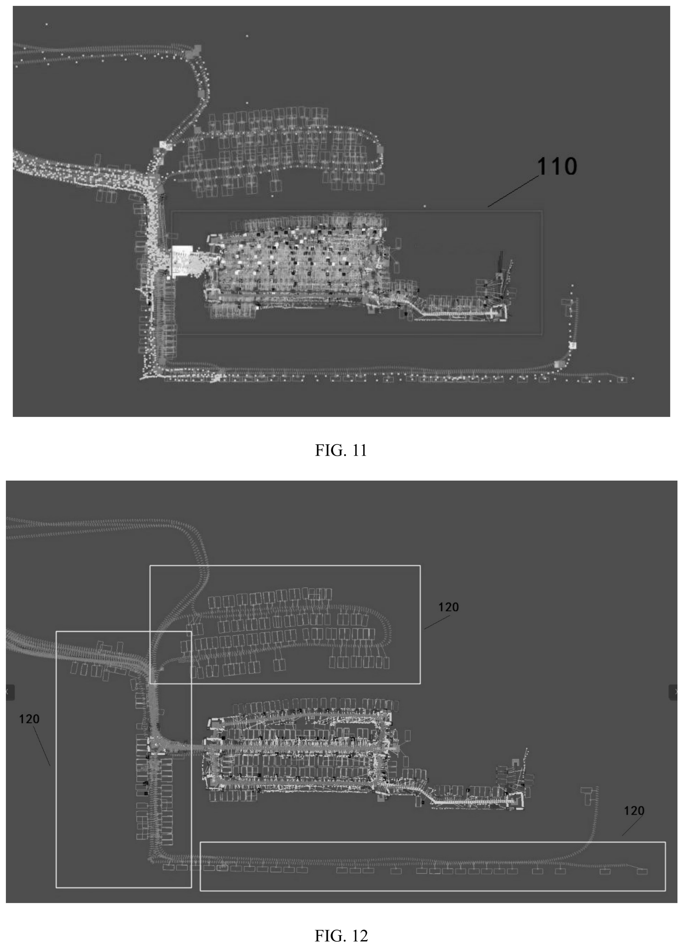

The historical map (original map, i.e., existing map) may be shown in FIG. 10, the original map area and the incremental map area corresponding to the updated map may be shown in FIG. 11 and FIG. 12 respectively, the original map area 110 is marked with a frame line in FIG. 11, and the incremental map area 120 is marked by a frame line in FIG. 12. The incremental trajectory data obtained by aligning with the historical map may expand the coverage area of the map and complete the missing semantic elements (i.e., semantic feature elements) of the map.

It can be found that the parking lot map generation method of the present application, compared to the parking lot mapping scheme of related art, comprises the following beneficial technical effects:

In the present application, 75% of the data are randomly selected from the selected dozens of representative trajectory data and divided into N data subsets, N candidate maps may be generated, and finally the candidate map with better quality is selected as the final output result, which improves map fault tolerance. The present application uses the idea of combination to obtain the association relationship between any two trajectories, and finally joint optimization is carried out to obtain the final alignment result, so as to avoid the influence of the cumulative error caused by the serial alignment in the related art. And it is also not affected by the single alignment result, so that map fault tolerance is high. The present application enables fully automated mapping without human intervention, and supports map updating.

Corresponding to the embodiment of the above-mentioned application function implementation method, the present application also provides a parking lot map generation apparatus and a parking lot map generation device.

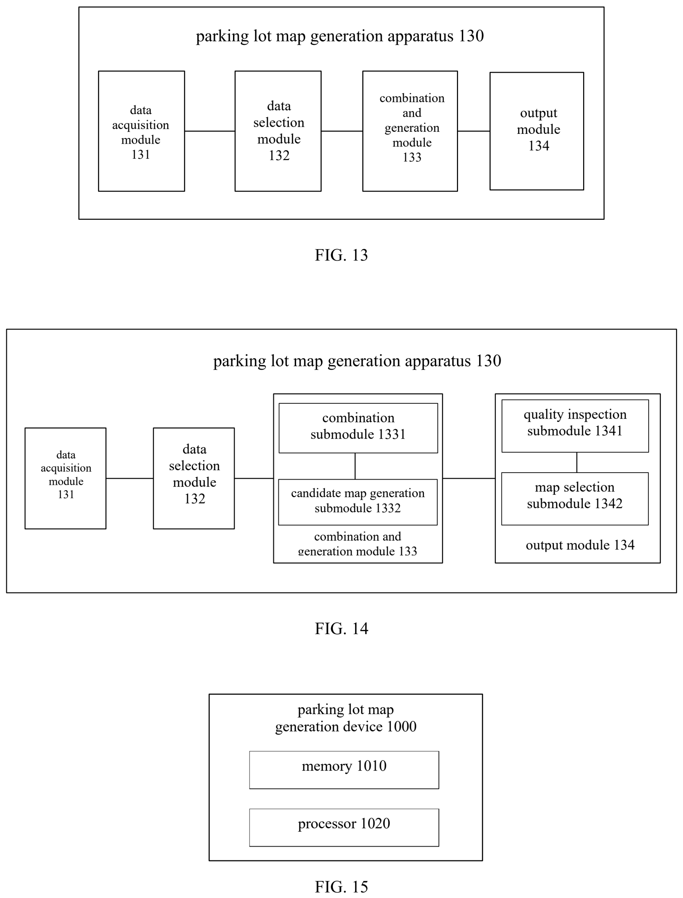

FIG. 13 is a first structural schematic diagram of a parking lot map generation apparatus shown in the present application.

Referring to FIG. 13, the present application provides a parking lot map generation apparatus 130. The apparatus comprises a data acquisition module 131, a data selection module 132, a combination and generation module 133, and an output module 134.

The data acquisition module 131 is configured to acquire crowdsourced trajectory data of a parking lot collected by different vehicles. The crowdsourced trajectory data may be different point cloud trajectory data obtained according to the trajectory data collected by different vehicles. The crowdsourced trajectory data includes at least two sets of point cloud trajectory data, for example, it may include a large amount of point cloud trajectory data.

The data selection module 132 is configured to select a set number of trajectory data meeting a preset condition from the crowdsourced trajectory data. A preset algorithm can be used to automatically select a set number of trajectory data that meets a preset condition from the crowdsourced trajectory data, such as dozens of trajectory data. Meeting a preset condition may refer to a set parameter greater than a set threshold, and the set parameter may be one or a combination of the following parameters: trajectory area density, trajectory coverage, type and number of semantic elements, trajectory length.

The combination and generation module 133 is configured to divide the set number of trajectory data into different data subsets and generate different candidate maps according to the different data subsets.

The output module 134 is configured to compare the different candidate maps and select one candidate map as a target map according to a comparison result.

According to the parking lot map generation apparatus provided in the present application, first, the set number of trajectory data that meet the preset conditions is selected from the crowdsourced trajectory data; then the set number of trajectory data is divided into different data subsets, and generating different candidate maps according to different data subsets; then the different candidate maps are compared, and one candidate map is selected as a target map according to a comparison result. By means of the described processing, the precision requirement of the crowdsourced trajectory data can be reduced, different candidate maps can be selected by dividing different data subsets and generating different candidate maps according to different data subsets, map fault tolerance of the map can also be improved, and the parking lot map can be fully automatically generated without manual participation in the whole mapping process.

FIG. 14 is a second structural schematic diagram of a parking lot map generation apparatus shown in the present application.

Referring to FIG. 14, the present application provides a parking lot map generation apparatus 130. The apparatus comprises a data acquisition module 131, a data selection module 132, a combination and generation module 133, and an output module 134.

The combination and generation module comprises 133: a combination submodule 1331, and a candidate map generation submodule 1332.

The combination submodule 1331 is configured to select a set proportion of trajectory data from the set number of trajectory data as one data subset according to a random or preset combination rule and divide the set number of trajectory data into different data subsets.

The candidate map generation submodule 1332 is configured to: perform alignment processing on any two trajectories in each data subset after combination, and store an association constraint relationship resulting from the alignment; obtain multiple groups of association constraint relationships after performing the alignment processing on each data subset; perform joint optimization on the selected set number of trajectory data meeting the preset condition and the multiple groups of association constraint relationships and, perform cluster extraction on semantic elements in each data subset after completing the joint optimization, and to generate a candidate map corresponding to each data subset. After performing alignment processing on each data subset, multiple groups of association constraint relationships are obtained, including: Cn2 groups of association constraint relationships after performing alignment processing on each data subset. Performing the alignment processing comprises: first performing coarse alignment according to a first semantic element, and then performing fine alignment according to a second semantic element. The first semantic element comprises one or a combination of the following: a trajectory shape, and a long parking stall, wherein the long parking stall is reassembled according to a parking stall feature in the crowdsourced trajectory data. The second semantic element comprises one or a combination of the following: a parking stall, a column, an arrow, a lane marking, and a speed bump.

The output module 134 comprises: a quality inspection submodule 1341, and a map selection submodule 1342.

The quality inspection submodule 1341 is configured to perform quality inspection on the different candidate maps.

The map selection submodule 1342 is configured to select one candidate map of good quality as the target map according to a quality inspection result.

The parking lot map generation apparatus of the present application, in the set number of trajectory data, selects a set proportion of trajectory data as a data subset according to a random or preset combination rule, and divides the set number of trajectory data into different data subsets. For each data subset, any two trajectories in the data subset are combined for alignment processing, then the aligned association constraint relationship is stored. After performing alignment processing on each data subset, multiple groups of association constraint relationships are obtained. Joint optimization is performed on the selected set number of trajectory data meeting the preset condition and the multiple groups of association constraint relationships, and then cluster extraction on semantic elements in each data subset is performed after completing the joint optimization, and a candidate map corresponding to each data subset is generated. The present application uses the idea of combination to obtain the association constraint relationship between any two trajectories, and finally joint optimization is performed uniformly to obtain a final alignment result. In this way, there is no influence of a cumulative error, and at the same time, there is no influence of a single alignment result, so that map fault tolerance is high.

With regard to the apparatus in the above embodiment, the specific mode in which each module performs the operation has been described in detail in the embodiment of the relevant method, and will not be elaborated here.

FIG. 15 is a schematic diagram of the structure of the parking lot map generation device shown in the present application. The parking lot map generation device may be, for example, a cloud server.

Referring to FIG.15, the parking lot map generation device 1000 comprises a memory 1010 and a processor 1020.

The processor 1020 may be a central processing unit (CPU), or other general-purpose processors, digital signal processors (DSPs), application-specific integrated circuits (ASICs), and field-programmable gate arrays (Field-Programmable Gate Array, FPGA) or other programmable logic devices, discrete gate or transistor logic devices, discrete hardware components, etc. A general-purpose processor can be a microprocessor, or the processor can be any regular processor, etc.

The memory 1010 may include various types of storage cells, such as system memory, read-only memory (ROM), and persistent storage devices. The ROM can store static data or instructions required by the processor 1020 or other modules of the computer. A permanent storage device can be a read-write storage device. A permanent storage device can be a non-volatile storage device that does not lose stored instructions and data even after a computer is powered off. In some embodiments, a permanent storage device employs a large-capacity storage device (e.g., magnetic or optical disk, flash memory) as a permanent storage device. In other embodiments, the permanent storage device may be a removable storage device (e.g., floppy disk, optical drive). System memory can be either a read-write storage device or a volatile read-write storage device, such as dynamic random access memory. System memory can store some or all of the instructions and data that the processor needs at runtime. In addition, memory 1010 can include any combination of computer-readable storage media, including various types of semiconductor memory chips (e.g., DRAM, SRAM, SDRAM, flash, programmable read-only memory), disks, and/or optical disks. In some embodiments, the memory 1010 may include removable storage devices that can be read and/or written, such as compact discs (CDs), read-only digital multifunction discs (e.g., DVD-ROM, dual-layer DVD-ROM), read-only Blu-ray discs, super-density optical discs, flash memory cards (e.g., SD cards, min SD cards, Micro-SD cards, etc.), magnetic floppy disks, etc. Computer-readable storage media do not contain carriers and instantaneous electronic signals transmitted wirelessly or wired.

The memory 1010 stores an executable program, and when the executable program is executed by the processor 1020, the processor 1020 may execute a part or all of the foregoing methods.

In addition, the method according to the present application may also be implemented as a computer program or a computer program product, and the computer program or computer program product comprises computer program code instructions for executing some or all of the steps in the described method according to the present application.

Alternatively, the present application may be embodied as a computer-readable storage medium (or non-transitory machine-readable storage medium or machine-readable storage medium), an executable code (or a computer program or a computer instruction code) is stored thereon, and when the executable code (or the computer program or the computer instruction code) is executed by a processor of an electronic device (or a server, etc. ),enabling a processor to execute some or all of the steps of the described method according to the present application.

The embodiments of the present application have been described above, and the above description is illustrative, not exhaustive, and not limited to the various embodiments disclosed. Without deviating from the scope and spirit of the various embodiments described, many modifications and changes are obvious to those of ordinary skill in the art. The terms used herein are chosen to best explain the principles, practical applications, or improvements to technology in the market for each embodiment, or to enable other people of ordinary skill in the art to understand the embodiments disclosed herein.

## Claims

1. A parking lot map generation method, **characterized in that**, the method comprises:
acquiring crowdsourced trajectory data of a parking lot collected by different vehicles;
selecting a set number of trajectory data meeting a preset condition from the crowdsourced trajectory data;
dividing the set number of trajectory data into different data subsets, and generating different candidate maps according to the different data subsets; and
comparing the different candidate maps, and selecting one candidate map as a target map according to a comparison result.

2. The method according to claim 1, wherein the selecting a set number of trajectory data meeting a preset condition from the crowdsourced trajectory data comprises:
selecting the set number of trajectory data with large coverage and rich semantic elements from the crowdsourced trajectory data.

3. The method according to claim 1, wherein the dividing the set number of trajectory data into different data subsets comprises:
selecting a set proportion of trajectory data from the set number of trajectory data as one data subset according to a random or preset combination rule so as to divide the set number of traj ectory data into different data subsets.

4. The method according to claim 1, wherein the generating different candidate maps according to the different data subsets comprises:
for each data subset, combining any two trajectories in the data subset and then performing alignment processing on the two trajectories, and storing an association constraint relationship resulting from the alignment;
obtaining multiple groups of association constraint relationships after performing alignment processing on each data subset;
performing joint optimization on the selected set number of trajectory data meeting the preset condition and the multiple groups of association constraint relationships, performing cluster extraction on semantic elements in each data subset after completing the joint optimization, and generating a candidate map corresponding to each data subset.

5. The method according to claim 4, wherein the obtaining multiple groups of association constraint relationships after performing alignment processing on each data subset comprises:
obtaining Cn2 groups of association constraint relationships after performing alignment processing on each data subset.

6. The method according to claim 4, wherein the performing alignment processing comprises:
performing coarse alignment according to a first semantic element, and then performing fine alignment according to a second semantic element.

7. The method according to claim 6, wherein:
the first semantic element comprises one or a combination of the following: a trajectory shape, and a long parking stall, wherein the long parking stall is reassembled according to a parking stall feature in the crowdsourced trajectory data; and
the second semantic element comprises one or a combination of the following: a parking stall, a column, an arrow, a lane marking, a speed bump.

8. The method according to claim 1, wherein the comparing the different candidate maps, and selecting one candidate map as a target map according to a comparison result comprises:
performing quality inspection on the different candidate maps, and selecting one candidate map of good quality as the target map according to a quality inspection result.

9. The method according to any of claims 1 to 8, wherein the method further comprises:
aligning the crowdsourced trajectory data with a historical map to obtain incremental trajectory data; and
updating the historical map according to the incremental trajectory data.

10. A parking lot map generation apparatus, **characterized in that**, the apparatus comprises:
a data acquisition module configured to acquire crowdsourced trajectory data of a parking lot collected by different vehicles;
a data selection module configured to select a set number of trajectory data meeting a preset condition from the crowdsourced trajectory data;
a combination and generation module configured to divide the set number of trajectory data into different data subsets and generate different candidate maps according to the different data subsets; and
an output module configured to compare the different candidate maps and select one candidate map as a target map according to a comparison result.

11. The apparatus according to claim 10, wherein the combination and generation module comprises:
a combination submodule configured to select a set proportion of trajectory data from the set number of trajectory data as one data subset according to a random or preset combination rule and divide the set number of trajectory data into different data subsets.

12. The apparatus according to claim 10, wherein the combination and generation module comprises:
a candidate map generation submodule configured to: perform alignment processing on any two trajectories in each data subset after combination, and store an association constraint relationship resulting from the alignment; obtain multiple groups of association constraint relationships after performing the alignment processing on each data subset; perform joint optimization on the selected set number of trajectory data meeting the preset condition and the multiple groups of association constraint relationships; and, perform cluster extraction on semantic elements in each data subset after completing the joint optimization, and generate a candidate map corresponding to each data subset.

13. The apparatus according to any of claims 10 to 12, wherein the output module comprises:
a quality inspection submodule configured to perform quality inspection on the different candidate maps; and
a map selection submodule configured to select one candidate map of good quality as the target map according to a quality inspection result.

14. A parking lot map generation device, comprising:
a processor; and
a memory having stored thereon an executable program which, when executed by the processor, causes the processor to execute the method according to any of claims 1-9.

15. A computer-readable storage medium having stored thereon an executable program which, when executed by a processor of an electronic device, causes the processor to execute the method according to any of claims 1-9.
